# FASCICULE DE BREVET EUROPEEN

(11) **EP 0 667 261 B1**
(45) Date de publication et mention de la délivrance du brevet: **11.06.1997**
(21) Numéro de dépôt: 95400268.9
(22) Date de dépôt: 09.02.1995
(51) Int. Cl.: B60R 9/058

(54) **Dispositif porte-bagages pour véhicules**
Gepäckträger für Kraftfahrzeuge
Luggage carrier for vehicles

(30) Priorité: 10.02.1994 FR 9401497
(43) Date de publication de la demande: 16.08.1995
(73) Titulaire: AUTOMAXI INDUSTRIES, F-35400 Saint Malo (FR)
(72) Inventeur: Ravier, Jean-Marie, F-35400 Saint Malo (FR)
(74) Mandataire: Lepercque, Jean

(56) Documents cités:
- DE-B- 1 184 229
- GB-A- 699 968
- GB-A- 713 791
- US-A- 4 586 638
- US-A- 4 995 538
- US-A- 5 118 020

## Description

La présente invention concerne un dispositif porte-bagages pour véhicules, permettant des usages multiples.

De nombreux types de porte-bagages sont connus. Les plus courants sont constitués d'une simple paire de barres transversales fixées sur le toit d'une automobile et sur lesquelles sont arrimés les bagages à l'aide de sangles ou éléments similaires. On prévoit des organes de fixation permettant le démontage et servant le plus souvent de descente de charge, c'est-à-dire de support pour le porte-bagages, ou pour le moins à proximité immédiate de ce support. D'autres types de porte-bagages ont la forme générale d'un plateau ou corbeille également fixé sur le toit d'un véhicule.

On conçoit aisément que ces types de porte-bagages ne sont pas adaptés lorsque l'on veut les fixer, par exemple, sur un hayon arrière ou sur la porte arrière d'un véhicule.

Dans ce cas, on recourt à des porte-bagages spécifiquement prévus pour cet usage. A titre d'exemple non limitatif, la demande de brevet allemand DE-A-3 123 723 et le brevet allemand DE-C-4 134 715 décrivent tous deux un porte-bagages arrière à fixer sur la porte ou le hayon arrière d'un véhicule automobile, en particulier d'un minibus, d'un camping-car ou autre véhicule similaire.

Cependant, même si on vise des porte-bagages destinés à être uniquement sur les toits, de nombreux véhicules posent problème.

En premier lieu, les véhicules modernes ne comportent plus, en général de gouttières. Les organes de fixation formant support doivent comporter des éléments d'accrochage destinés à être insérés dans l'interstice subsistant entre le haut des portières et la carrosserie. Il existe donc une première contrainte dans le positionnement de ces éléments d'accrochage, même si la latitude de positionnement reste importante.

En deuxième lieu, il existe de nombreux véhicules dont le toit présente des courbures importantes. Cette caractéristique restreint fortement le choix des zones d'attache. Pour fixer les idées, il est parfois nécessaire de rapprocher les points d'attache de moins de 0,50 m pour s'affranchir de la courbure, ce qui restreint considérablement les capacités de chargement.

On constate également que le pavillon des véhicules actuels n'est le plus souvent rigide que dans des zones de surface restreinte, localisées sur les bords du toit. Il est donc nécessaire que les descentes de charge prennent appui sur ces zones et uniquement sur ces zones, de manière à éviter qu'une charge importante ne déforme la tôle du toit.

Enfin certains types de véhicules, tels que les cabriolets, exigent un positionnement des porte-bagages sur une partie de la carrosserie qui, en raison de leur nature, ne peut être le toit. On place donc le porte-bagages sur le coffre arrière, ce qui pose aussi des problèmes spécifiques.

Ces états de fait qui viennent d'être rappelés expliquent la prolifération de porte-bagages de types et de structures différentes destinées soit à des usages particuliers : porte-bagages arrières, de toit, etc.., soit à des véhicules de marque et de type différents.

L'invention vise à pallier les inconvénients des porte-bagages de l'art connus en proposant un porte-bagages à usage universel susceptible d'être disposé sur différentes zones : toit, porte arrière, hayon arrière ou coffre; d'un même véhicule ou de véhicules différents : berline classique, break, cabriolet, minibus, camping-car, etc., sans nécessiter d'adaptation allant au-delà des réglages usuels. En outre, comme il le sera décrit de façon détaillée ci-après, la structure du porte-bagages selon l'invention reste simple, ce qui permet une fabrication aisée et peu coûteuse.

Pour atteindre le but qu'elle s'est fixé, l'invention prévoit tout d'abord de dissocier les descentes de charge des organes de fixation, qu'elles soient sur l'avant ou sur l'arrière du porte-bagages. L'armature principale du porte-bagages selon l'invention est constituée simplement d'un cadre le long duquel coulissent, d'une part, les organes de fixation, d'autre part, les organes de descente de charge. Cette disposition autorise un positionnement à volonté de ces organes le long du toit ou, de façon plus générale, sur la zone considérée de la carrosserie.

Selon un mode de réalisation préféré, le cadre comprend deux arceaux latéraux réalisés à partir d'un profilé extrudé et deux barres transversales d'assemblage, permettant un réglage en largeur de l'armature principale.

Toujours dans un mode de réalisation préféré, les organes de descente de charge comprennent chacun un sabot oscillant monté sur rotule, ce qui permet une adaptation optimale à la forme du toit dans la zone où repose ce sabot.

Enfin, le porte-bagages selon l'invention est muni avantageusement d'un arceau rabattable, en rotation autour d'un axe transversal.

L'invention a donc pour objet un dispositif porte-bagages pour véhicule du type comprenant un cadre ayant deux branches latérales et au moins deux branches transversales, et des moyens d'accrochage de ce cadre à la carrosserie du véhicule, détachables, comprenant en outre, associés chaque branche latérale, au moins deux organes de descentes de charge formant support dudit cadre et reposant sur une zone déterminée de la carrosserie du véhicule, ces organes de descente de charge étant distincts des moyens d'accrochage et comprenant un corps principal sur lequel repose ledit cadre et un moyen d'appui muni d'un patin en matériau élastique destiné à assurer le contact avec ladite zone de la carrosserie du véhicule, caractérisé en ce que ledit corps principal et ledit moyen d'appui de l'organe de descente de charge sont couplés mécaniquement à l'aide d'une rotule de manière à autoriser une oscillation d'amplitude maximale déterminée du moyen d'appui autour d'un axe sensiblement perpendiculaire au plan formé par ledit cadre.

L'invention sera mieux comprise et d'autres caractéristiques et avantages apparaîtront à la lecture de la description qui suit en référence aux figures annexées, et parmi lesquelles :
- La figure 1 est une vue d'ensemble illustrant l'utilisation du porte-bagages selon l'invention comme porte-bagages pour toit de véhicule;
- La figure 2 une vue de détail illustrant la fixation d'un organe de descente de charge au cadre du porte-bagages selon l'invention;
- La figure 3 illustre de façon détaillée un exemple d'organe de descente de charge selon un mode préféré de réalisation du porte-bagages de l'invention;
- La figure 4 illustre de façon détaillée un exemple de réalisation d'un organe de fixation du cadre d'un porte-bagages selon l'invention;
- La figure 5 illustre l'utilisation d'un porte-bagages selon l'invention comme porte-bagages de coffre d'un véhicule;
- La figure 6 illustre l'utilisation d'un porte-bagages selon l'invention comme porte-bagages de porte arrière d'un véhicule;

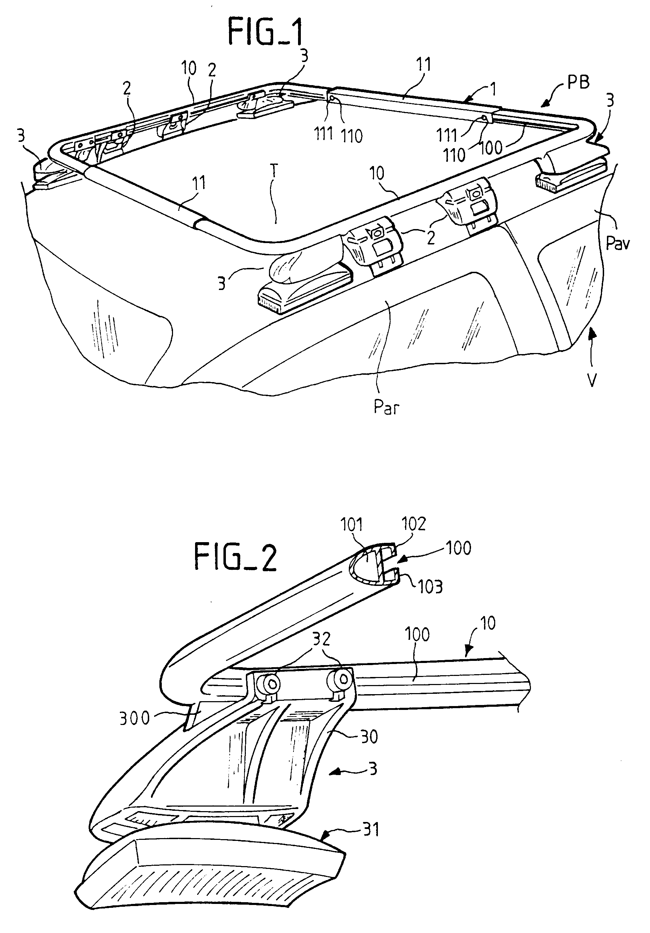

La figure 1 est une vue d'ensemble illustrant l'utilisation du porte-bagages PB selon l'invention en position de porte-bagages de toit, ce qui est l'utilisation la plus courante de ce type de dispositif. Plus particulièrement, cette figure, comme on va l'expliciter ci-après, illustre les caractéristiques essentielles du porte-bagages selon l'invention. Le porte-bagages PB comprend tout d'abord un cadre tubulaire 1, de forme sensiblement rectangulaire. Dans un mode de réalisation préféré de l'invention, le cadre 1 comprend deux arceaux latéraux 10 réalisés à partir de deux profilés extrudés en forme de "U" et de deux barres transversales 11 réalisées à l'aide de tubes creux.

Comme illustré de façon plus détaillé par la figure 2, dans ce mode de réalisation préférentiel, chaque profilé 10 est doté d'une saignée longitudinale 100, débouchant vers l'intérieur du "U", c'est-à-dire vers l'intérieur du cadre, dans l'exemple illustré. Cette saignée 100, avec les bords adjacents, 102 et 103, forme rail de guidage pour des moyens de blocages qui vont être détaillés dans ce qui suit. Pour augmenter la rigidité du cadre, on prévoit avantageusement de renforcer la structure interne du profilé. On peut le doter d'une nervure ou cloison interne 101, comme illustré sur la figure 2.

A la saignée 100 est assigné un double rôle.

En premier lieu, les extrémités du "U" sont glissées à l'intérieur des tubes 11. Ceux-ci sont munis, dans une zone proche de leurs extrémités de moyens de blocage des arceaux 10. De façon classique, on peut prévoir un trou 110 à chaque extrémité destinée à recevoir un jeu d'écrous et de vis 111. Cette disposition permet de régler aisément la largeur du cadre 10. Il suffit d'enfoncer convenablement les arceaux 10 dans les tubes 11 et de les bloquer dans la position voulue à l'aide des moyens de blocage précités, 110 et 111.

En second lieu, on va fixer aux arceaux 10, d'une part, des organes de descente de charge ou support 3, d'autre part, des organes de fixation 2 du cadre à la carrosserie du véhicule V. En effet, selon une des caractéristiques importantes de l'invention, ces deux fonctions sont dissociées.

De façon avantageuse, chacun de ces organes est fixé au cadre de façon analogue à ce qui vient d'être décrit pour le blocage des arceaux 10 dans les tubes 11. On utilise également un jeu de vis et écrous : 32, sur la figure 2. Sur cette dernière figure on a représenté un organe de descente de charge 3. On comprend aisément que l'on puisse faire glisser cet organe 3 tout le long du profilé 10, si la saignée 100, comme illustré sur la figure, a été pratiquée sur toute sa longueur. La saignée peut en effet n'être pratiquée que sur une partie de la longueur du fond du "U". En pratique, si l'arceau 10 est réalisé à base d'un profilé extrudé, la saignée est réalisée au moment de l'extrudage et donc sur toute la longueur du profilé. On doit bien comprendre que les organes de fixation 2, non représentés sur la figure 2, sont attachés au profilé 10 de façon tout à fait similaire. Il s'ensuit que ceux-ci peuvent également glisser le long dudit profilé 10. On peut donc, de façon extrêmement simple régler la position de l'un et l'autre de ces organes pour les placer au mieux sur la surface du toit.

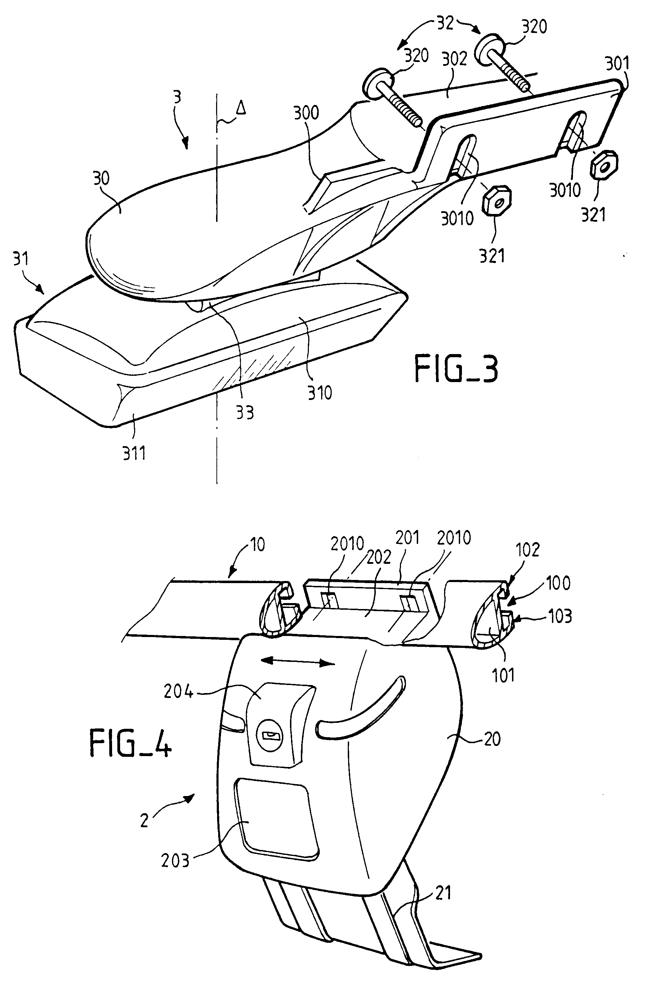

De façon habituelle, chacun des arceaux latéraux 10 du cadre 1 est muni d'au moins deux organes de descente de charges 3, l'un positionné vers l'avant, l'autre vers l'arrière du toit du véhicule V. On utilise également un ou deux organes de fixation 2. Bien qu'en théorie, un seul soit suffisant, dans la plupart des applications, pour assurer un arrimage correct du cadre sur le toit du véhicule, la configuration illustrée parait la mieux adaptée. Par contre, pour des charges lourdes et, plus particulièrement dans le cas de véhicule de grande longueur, il pourra être utile d'augmenter le nombre d'organes de fixation 2, voire d'organes de descente de charge 3. La position exacte de ces organes, 2 et 3, dépend naturellement de la marque et du type de véhicule considéré. C'est d'ailleurs un des avantages du dispositif selon l'invention qui permet un réglage aisé de la position de ces organes. Dans l'exemple illustré par la figure 1, les organes de descente de charge sont situés tout à l'avant et tout à l'arrière du cadre, ce qui constituera une position très fréquente. Les deux organes de fixation 2 ont été positionnés, l'un dans une zone médiane du cadre 1, l'autre vers l'arrière de ce même cadre. De façon connue en soi, ces organes de fixation 2 sont munis d'éléments d'accrochage qui vont être décrits ci-après par référence à la figure 4 et que l'on glisse dans l'interstice laissé libre entre le haut des portières et le bas du toit. Dans l'exemple illustré, sans que cela soit en quoique ce soit limitatif de la portée de l'invention, les deux éléments d'accrochage sont glissés dans l'interstice laissé libre entre le haut de la porte arrière Pₐᵣ et le toit T du véhicule V. Dans une autre configuration, l'organe d'accrochage avant, par exemple, aurait pu tout aussi bien être fixé au niveau de la portière avant Pₐᵥ.

La figure 3 illustre, démonté, un exemple de réalisation d'un organe de descente de charge 3 selon un mode préféré. Il comprend un corps principal 30 couplé mécaniquement à un patin 31. Celui-ci comprend lui-même un corps supérieur 310 rigide et une plaquette 311, d'appui sur la carrosserie du véhicule. Cette plaquette 311 est avantageusement réalisée en matériau élastique, de manière à, d'une part, absorber les forces de compression lorsque l'on va fixer le cadre à la carrosserie du véhicule, et, d'autre part, à éviter tout risque de rayure ou de détérioration de la surface de la carrosserie en contact avec cette plaquette 311. Cette disposition est naturellement bien connue, en soi. Selon le mode de réalisation préféré, le couplage mécanique entre le corps principal supérieur 30 et le patin inférieur 31 n'est pas réalisé de façon rigide, mais par l'intermédiaire d'une rotule 33, ou d'un élément similaire, emboîtée dans le corps principal. Par cette disposition, le patin 31 peut osciller autour d'un axe Δ (figure 3) sensiblement perpendiculaire au plan défini par le cadre 1 (figure 1). L'amplitude maximale de l'angle d'inclinaison du patin par rapport à cet axe Δ (figure 3) sera réglée, au moment de la fabrication, en fonction en fonction de l'usage prévisible d'un type donné de porte-bagages PB. Il est conditionné principalement par les formes relatives du corps 30, de la rotule 33 et du patin 31.

Cette disposition avantageuse permet de s'affranchir en grande partie de s'affranchir des contraintes dues à la courbure du toit T du véhicule V dans la zone où repose l'organe de descente de charge 3.

Le corps principal, pour sa part, comporte une zone supérieure 302, légèrement incurvée dans l'exemple illustré. Cette zone 302, formant plateau, est destinée à supporter le profilé 10 et sa configuration exacte est naturellement dépendante de la forme extérieure du profilé 10. Le corps principal comprend également une paroi 301 sur laquelle va venir prendre appui la face rainurée du profil 10. Cette paroi 301 est dotée d'orifices 3010, destinés à laisser le passage libre à des vis 320 dont la tête, dans l'exemple illustré, va être emprisonnée par le rail de guidage formé par les lèvres, 102 et 103, de la saignée 100 pratiquée dans le profilé 10 (figure 1). Des écrous 321 permettent de serrer cette paroi 301 contre la paroi en vis à vis du profilé 10 et, par là même bloquer l'organe de descente de charge 3 le long du profilé 10, à un endroit approprié.

De façon avantageuse, le corps 30 étant généralement doté d'un profil arrondi, on peut prévoir, sur sa partie supérieure, une nervure de soutien 300 de faible épaisseur, prolongeant la zone formant plateau 302. La face inférieure du profilé 10 s'appuie sur cette nervure 300.

La figure 4 illustre un exemple de réalisation possible d'un organe de fixation 2. Il comprend un corps principal 20 prolongé à une extrémité inférieure par élément d'accrochage 21 d'un type connu en soi. Comme il a été précédemment indiqué, cette pièce, formant crochet, est destinée à être insérée dans la fente laissée libre entre le bord d'une portière et la carrosserie. Cette pièce 21 rigide, en générale réalisée en acier, est donc de faible épaisseur. En outre, elle est mobile par rapport au corps principal 20. Un système à vis, symbolisé par la référence 203, permet de la rétracter plus ou moins de façon à ce qu'elle exerce une force de traction sur le cadre 1, et de façon plus précise sur le profilé 10 qui lui est associé. On peut également compléter l'ensemble par une serrure 204, ayant la fonction d'antivol. Cette disposition est également connue, en soi.

De manière similaire à l'organe de descente de charge, il est prévu une zone 202 formant plateau pour le profilé 10 et une paroi 201 sur laquelle va trouver appui la face rainurée du profilé 10. Cette paroi 201 est dotée d'orifices 2010, destinés à laisser le passage libre à des vis (non représentées) de façon tout à fait similaire à ce qui a été décrit pour l'organe de descente de charge 3. Le réglage et le blocage le long du profilé 10 s'effectuent de façon identique, et il est inutile de les redécrire.

Dans la description qui précède, il doit être clair que les notions d"'inférieur" et "supérieur" sont des notions relatives, utilisées pour des raisons de commodité de description. Comme illustré ci-après, le cadre 1 du porte-bagages PB selon l'invention peut prendre une position quelconque dans l'espace, et non seulement la position sensiblement horizontale habituelle à un porte-bagages de toit.

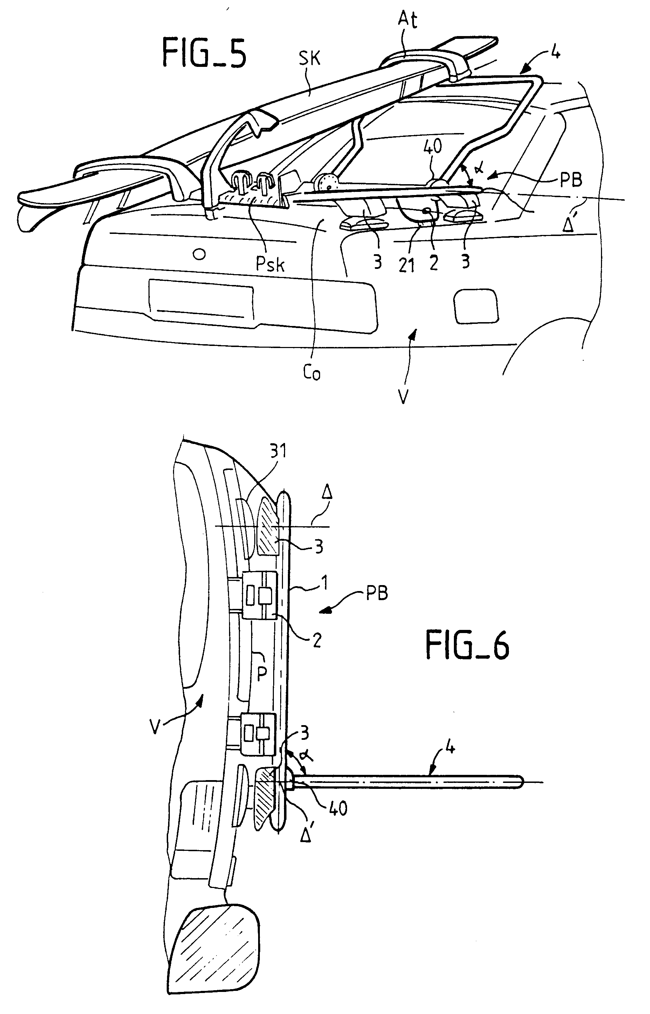

Les figures 5 et 6 illustrent deux usages possibles parmi de nombreux autres du porte-bagages PB selon l'invention.

La figure 5 illustre la possibilité d'accrocher le porte-bagages PB selon l'invention sur le coffre C_{O} d'un véhicule V. Le capot du coffre C_{O} remplace la porte du véhicule pour la fonction accrochage. L'élément d'accrochage 21 de l'organe de fixation 2 est glissé dans l'interstice laissé libre entre le capot C_{O} et la carrosserie qui l'entoure. Dans l'exemple illustré, on n'a utilisé qu'un seul organe d'accrochage 2, sur chaque côté, disposé sensiblement à mi-distance entre les deux organes de descente de charge 3.

La figure 5 illustre une possibilité supplémentaire offerte par le porte-bagages PB selon l'invention. On peut, en effet, munir avantageusement celui-ci d'un arceau 4 mobile en rotation autour d'un axe transversal Δ' parallèle au plan formé par le cadre 1. Dans la variante de réalisation illustrée sur la figure 5, l'axe de rotation est muni d'un système de réglage 40 classique à cliquet permettant de régler la position de l'arceau 4, c'est à dire l'angle d'inclinaison α de celui-ci par rapport au cadre 1. Cette disposition est particulièrement intéressante dans l'utilisation en tant que porte-bagages de coffre. Elle permet notamment de poser sur le porte-bagages PB des objets longs, tels que des skis, planches de surf ou articles similaires, dont les dimensions seraient autrement incompatibles avec la longueur du coffre et surtout la présence de la lunette arrière du véhicule V.

Dans l'exemple illustré sur la figure 5, on a fixé sur la partie arrière un dispositif porte-skis classique P_{SK}, de tout type approprié. On a fixé une extrémité d'une paire de skis SK à l'aide de ce porte skis P_{SK} et posé l'autre extrémité sur l'arceau 4. On complète l'ensemble par une attache Aₜ, également d'un type classique, disposée sur l'arceau 4.

La figure 6, pour sa part, illustre l'utilisation du porte-bagages PB selon l'invention en tant que porte-bagages pour porte arrière P d'un véhicule V du type minibus, camping-car ou similaire. On constate que dans ce cas, le plan formé par le cadre 1 est sensiblement vertical par rapport au sol. On constate également sur le dessin que, du fait de la rotation possible du patin 31 autour de l'axe Δ, ce dernier s'adapte parfaitement à la courbure accentuée de la partie supérieure du panneau arrière.

On a également représenté sur cette figure un mode de réalisation alternatif du mécanisme 40 permettant la rotation de l'arceau 4 autour de l'axe Δ'. Dans cet exemple de réalisation, l'arceau ne peut prendre que deux positions stables : une position dépliée (illustrée sur la figure), pour laquelle l'angle d'ouverture α de l'arceau 4 est sensiblement égal à 90°, dans cet exemple de réalisation, et une position repliée (non représenté), pour laquelle l'angle d'ouverture est sensiblement nul.. Il suffit de munir, de façon classique, le mécanisme 40 d'un axe de rotation parallèle à Δ' et d'une butée limitant l'angle maximal d'ouverture à la valeur désirée. Ce mode de réalisation particulier, que l'on peut qualifier de simplifié, peut être jugé intéressant si le porte-bagages PB n'est utilisé qu'en tant que porte-bagages de porte arrière. En effet, pour cette application, l'arceau 4 sert essentiellement de plateau de soutien des objets accrochés au porte-bagages PB et une seule position ouverte, sensiblement horizontale, est suffisante pour la très grande majorité des cas.

Bien que les possibilités offertes par le porte-bagages PB selon l'invention n'aient pas été décrites de façon exhaustive, les trois applications principales, illustrées par les figures 1, 5 et 6, montrent clairement que le porte-bagages est bien adapté à de nombreuses configurations. Quelle que soit sa position d'attache sur la carrosserie et/ou le type de véhicule, seuls quelques régalages élémentaires sont nécessaires, le porte-bagages PB conservant par ailleurs une structure très simple. Il est en outre bien adapté à une fabrication en série. Le cadre, notamment, dans le mode de réalisation préféré, est obtenu, d'une part, à partir de simples profilés extrudés (arceaux latéraux), coupés à la longueur voulue et coudés, et, d'autre part, de tubes creux classiques (barres transversales). Les autres pièces diffèrent peu des pièces utilisées sur les porte-bagages de l'art connu, notamment les organes de fixation 2. On peut donc mettre en oeuvre les techniques de productions habituelles à ce domaine.

Le porte-bagages PB, tel qu'il vient d'être décrit, atteint bien les buts que s'est fixés l'invention.

Pour fixer les idées, les principales données techniques typiques caractérisant le porte-bagages PB sont les suivantes :
- longueur des barres transversales 11 : 600 mm; matériau : acier
- arceaux latéraux 10 :
   - fond du "U" : 600 mm et branches du "U" : 300 mm
   - matériau : profilé extrudé en aluminium
- course de réglage en largeur du cadre 1 : 300 mm
- arceau dépliable 4 (lorsqu'il existe) : longueur 600 mm environ
- mécanisme à cliquet 40 : permet un réglage de l'angle α par incréments de 15°
- organe de fixation : réalisé de façon classique, en acier
- organe de descente de charge : corps principal 30 et patin 310 en matériau plastique, par exemple en polycarbonate; plaquette du patin d'appui 311 en évoprène; et rotule 32 en matériau composite.

Cependant, il doit être clair que l'invention n'est pas limitée aux seuls exemples de réalisations précisément décrits, notamment en relation avec les figures 1 à 6. En particulier, les dimensions géométriques rappelées ci-dessus ainsi que les matériaux utilisables n'ont été donnés qu'à titre d'exemple non limitatif en quoique ce soit de la portée de l'invention.

En particulier, bien que la structure du cadre, obtenu à l'aide de deux profilés en "U" et de deux tubes rectilignes creux, soit particulièrement avantageuse car simple à réaliser, on peut prévoir (dans une variante de réalisation non représentée), pour des applications particulières, des éléments transversaux supplémentaires, notamment pour des porte-bagages de grandes dimensions. Naturellement le cadre 1 présentera alors une structure plus complexe. On peut enfin considérer le cadre illustré, notamment par la figure 1, comme un module élémentaire. Le porte-bagages PB sera alors réalisé par l'assemblage d'un ou plusieurs modules. Il suffit, pour ce faire, de modifier légèrement au moins l'une des barres transversales 11 de manière à pouvoir y introduire deux extrémités de profilés 10. Les moyens de blocage associés (figure 1 : 110, 111) devront être dédoublés.

Enfin le nombre d'organes de descente de charge 3 ainsi que le nombre d'organe d'accrochage 2 peuvent être variables selon le type précis de porte-bagages et l'usage auquel il est destiné, comme il a été décrit.

## Revendications

1. Dispositif porte-bagages (PB) pour véhicule (V) du type comprenant un cadre (1) ayant deux branches latérales (10) et au moins deux branches transversales (11), et des moyens d'accrochage (2) de ce cadre (1) à la carrosserie du véhicule (V), détachables, comprenant en outre, associés chaque branche latérale, au moins deux organes de descentes de charge (3) formant support dudit cadre (1) et reposant sur une zone déterminée de la carrosserie (T, C_{O}, P) du véhicule (V), ces organes de descente de charge (3) étant distincts des moyens d'accrochage (2) et comprenant un corps principal (30) sur lequel repose ledit cadre (1) et un moyen d'appui (31) muni d'un patin en matériau élastique (311) destiné à assurer le contact avec ladite zone de la carrosserie (T, C_{O}, P) du véhicule (V), caractérisé en ce que ledit corps principal (30) et ledit moyen d'appui (31) de l'organe de descente de charge sont couplés mécaniquement à l'aide d'une rotule (33) de manière à autoriser une oscillation d'amplitude maximale déterminée du moyen d'appui (31) autour d'un axe (Δ) sensiblement perpendiculaire au plan formé par ledit cadre (1).

2. Dispositif porte-bagages (PB) selon la revendication 1, caractérisé en ce que ledit cadre (1) comprend deux branches transversales (11) constituées de tubes creux rectilignes et de deux branches latérales (10) en forme de "U", dont les extrémités sont enfilées dans les tubes creux, en ce que les branches latérales (10) sont munies d'un rail de guidage (100, 102, 103), au moins sur le fond du "U" et tourné vers l'intérieur du "U", en ce que lesdits organes de descente de charge (3) et moyens d'accrochage (2) sont munis, tous deux, de moyens de blocage (32, 2010) formant avec ce rail de guidage (100, 102, 103) lesdits moyens de couplage mécanique mutuel, de manière à permettre le glissement le long du rail et le blocage dans lesdites positions réglables, et en ce que les tubes creux formant les branches transversales (11) sont munis de moyens de blocage (110, 111) des branches latérales (10) enfilés dans ces tubes, de manière à autoriser un réglage de la dimension dudit cadre (1) suivant une direction transversale.

3. Dispositif porte-bagages (PB) selon la revendication 2, caractérisé en ce que les branches latérales (10) sont réalisées à partir d'un profilé extrudé et coudé, en ce que ledit rail de guidage est constitué par une saignée longitudinale (100) de ce profilé et les lèvres adjacentes (102, 103) à cette saignée (100).

4. Dispositif porte-bagages (PB) selon l'une quelconque des revendications 1 à 3, caractérisé en ce que ledit cadre est muni en outre d'un arceau (4) mobile autour d'un axe (Δ') parallèle a la direction transversale et susceptible de prendre au moins deux positions dans l'espace, une première position fermée et une seconde position dépliée pour laquelle il fait un angle d'ouverture maximal déterminée (α) avec le plan formé par le cadre (1).

5. Dispositif porte-bagages (PB) selon la revendication 4, caractérisé en ce qu'il comporte en outre un mécanisme à cliquet permettant de régler ledit angle d'ouverture (α) par incréments réguliers entre ladite position fermée et la position dépliée.

6. Dispositif porte-bagages (PB) selon l'une quelconque des revendications 1 à 5, caractérisé en ce que ladite zone déterminée de la carrosserie du véhicule (V) est le toit (T).

7. Dispositif porte-bagages (PB) selon l'une quelconque des revendications 1 à 6, caractérisé en ce que ladite zone déterminée de la carrosserie du véhicule (V) est le coffre arrière (C_{O}).

8. Dispositif porte-bagages (PB) selon l'une quelconque des revendications 1 à 6, caractérisé en ce que, le véhicule étant du type minibus ou similaire, ladite zone déterminée de la carrosserie du véhicule (V) est la porte arrière (P).

## Claims

1. Baggage carrier device (PB) for a vehicle (V), of the type comprising a frame (1) having two side members (10) and at least two transverse members (11) and means (2) for attaching this frame (1) to the body of the vehicle (V), these means being detachable, and also comprising, associated with each side member, at least two load-lowering devices (3) forming a support for the said frame (1) and resting on a particular zone of the body (T,C _{O}, P) of the vehicle (V), these load-lowering devices (3) being distinct from the attachment means (2) and comprising a main body (30) on which the said frame (1) rests and a supporting means (31) equipped with a shoe (311) of elastic material designed to provide the contact with the said zone of the body (T,C _{O}, P) of the vehicle (V), characterized by the fact that the said main body (30) and the said supporting means (31) for the load-lowering device are mechanically coupled by means of a swivel (33) in such a way as to enable the supporting means (31) to perform an oscillation of a certain maximum amplitude about an axis (Δ) substantially perpendicular to the plane formed by the said frame (1).

2. Baggage carrier device (PB) in accordance with Claim 1, characterized by the fact that the said frame (1) comprises two side members (11) consisting of rectilinear hollow tubes and two side members (10) in the shape of a "U" of which the ends fit into the hollow tubes, that the side members (10) are provided with a guide rail (100, 102, 103) at least on the base of the "U" and facing towards the interior of the "U",that the said load-lowering device (3) and attachment means (2) are both fitted with locking means (32,2010) which in conjunction with the said guide rail (100, 102, 103) form the said reciprocal mechanical coupling means, in such a way as to enable the device to perform the sliding movement along the rail and to be locked in the said adjustable positions, and that the hollow tubes forming the transverse members (11) are equipped with locking means (110, 111) for the lateral members (10) fitted into these tubes, in such a manner as to enable the size of the said frame (1) to be regulated in a transverse direction.

3. Baggage carrier device (PB) in accordance with Claim 2, characterized by the fact that the side members (10) are made from an extruded bent section and that the said guide rail consist of a longitudinal cut (100) in this section and the lips (102, 103) adjacent to this cut (100).

4. Baggage carrier (PB) in accordance with any one of Claims 1 to 3, characterized by the fact that the said frame is also equipped with an arched piece (4) movable about an axis (Δ) parallel to the transverse direction and capable of assuming at least two positions in space, a closed first position and an opened-out second position for which it forms a certain maximum angle of opening (α) with the plane formed by the frame (1).

5. Baggage carrier device (PB) in accordance with Claim 4, characterized by the fact that it includes a ratchet mechanism enabling the said angle of opening (α) to be regulated in even stages between the said closed position and the opened-out position.

6. Baggage carrier device (PB) in accordance with any one of Claims 1 to 5, characterized in that the said particular zone of the body of the vehicle (V) is the roof (T).

7. Baggage carrier device (PB) in accordance with any one of Claims 1 to 6, characterized by the fact that the said particular zone of the body of the vehicle (V) is the boot (C _{O}).

8. Baggage carrier device (PB) in accordance with any one of Claims 1 to 6, characterized by the fact that when the vehicle is of the minibus or similar type the said particular zone of the body of the vehicle (V) is the rear door (P).

## Patentansprüche

1. Gepäckträger (PB) für Kraftfahrzeuge (V), umfassend einen Rahmen (1) mit zwei seitlichen Streben (10) und zumindest zwei Querstreben (11), sowie Mitteln zur Befestigung (2) dieses Rahmens (1) an der Karosserie des Fahrzeugs (V), die lösbar sind, weiterhin umfassend zumindest zwei, jeder Querstrebe zugeordnete Lastabstützteile (3), die eine Abstützung für den genannten Rahmen (1) bilden und auf einer vorbestimmten Zone der Karosserie (T, C_{O}, P) des Fahrzeugs (V) aufliegen, wobei sich diese Lastabstützteile (3) von den Befestigungsmitteln (2) unterscheiden und einen Grundkörper (30), auf dem der Rahmen (1) aufliegt, und ein Auflagemittel (31) aufweisen, das mit einem Schuh aus elastischen Material (311) versehen ist, um den Kontakt mit der genannten Zone der Karosserie (T, C_{O}, P) des Fahrzeugs (V) zu gewährleisten, dadurch gekennzeichnet, daß der Grundkörper (30) und das Auflagemittel (31) der Lastabstützteile mechanisch mit einem Kugelgelenk (33) gekoppelt sind, so daß eine Hin- und Herbewegung mit einer bestimmten maximalen Amplitude des Abstützmittels (31) um eine Achse (Δ) möglich ist, die im wesentlichen senkrecht zu der durch den Rahmen (1) gebildeten Ebene ist.

2. Gepäckträger (PB) nach Anspruch 1, dadurch gekennzeichnet, daß der Rahmen (1) zwei Querstreben (11) aufweist, die aus hohlen, geradlinigen Rohren bestehen, sowie zwei seitliche, U-förmige Streben (10), deren Endabschnitte in die hohlen Rohre eingesteckt sind, wobei die seitlichen Streben (10) mit einer Führungsschiene (100, 102, 103) versehen sind, zumindest auf dem Boden des "U" und zum Inneren des "U" hin weisend, wobei die genannten Lastabstützteile (3) und Befestigungsmittel (2) beide mit Blockierungsmitteln (32, 2010) versehen sind, die mit der Führungsschiene (100, 102, 103) die genannten Mittel zur gegenseitigen mechanischen Kopplung bilden, indem sie eine Verschiebung längs der Schiene und die Blockierung in den genannten einstellbaren Positionen ermöglichen, und wobei die die Querstreben (11) bildenden, hohlen Rohre mit Blockierungsmitteln (110, 111) für die in diese Rohre eingesteckten seitlichen Streben (10) versehen sind, um eine Einstellung der Größe des Rahmens (1) in Querrichtung zu ermöglichen.

3. Gepäckträger (PB) nach Anspruch 2, dadurch gekennzeichnet, daß die seitlichen Streben (10) aus einem extrudieren und abgewinkelten Profil hergestellt sind, wobei die Führungsschiene durch einen in Längsrichtung verlaufenden Einschnitt (100) dieses Profils und die diesem Einschnitt (100) benachbarten Ränder (102, 103) gebildet wird.

4. Gepäckträger (PB) nach einem der Ansprüche 1 bis 3, dadurch gekennzeichnet, daß der Rahmen einen Bügel (4) aufweist, der um eine Achse (Δ'), die parallel zur Querrichtung verläuft, beweglich ist, und der zumindest zwei Positionen im Raum einnehmen kann, nämlich eine erste, geschlossene Position und eine zweite, ausgefaltete Position, in der er einen maximalen, bestimmten Öffnungswinkel (α) mit der durch den Rahmen (1) gebildeten Ebene bildet.

5. Gepäckträger (PB) nach Anspruch 4, weiter gekennzeichnet durch einen Rastmechanismus, der es ermöglicht, den genannten Öffnungswinkel (α) in regelmäßigen Schritten zwischen der geschlossenen Position und der aufgefalteten Position einzustellen.

6. Gepäckträger (PB) nach einem der Ansprüche 1 bis 5, dadurch gekennzeichnet, daß die bestimmte Zone der Karosserie des Fahrzeugs (V) das Dach (T) ist.

7. Gepäckträger (PB) nach einem der Ansprüche 1 bis 6, dadurch gekennzeichnet, daß die bestimmte Zone der Karosserie des Fahrzeugs (V) der hintere Kofferraum (C_{O}) ist.

8. Gepäckträger (PB) nach einem der Ansprüche 1 bis 6, dadurch gekennzeichnet, daß die bestimmte Zone der Karosserie des Fahrzeugs (V), wobei das Fahrzeug ein Kleinbus oder ähnliches ist, die Hecktür (P) ist.
